# FASCICULE DE BREVET EUROPEEN

(11) **EP 2 959 193 B1**
(45) Date de publication et mention de la délivrance du brevet: **01.04.2020**
(21) Numéro de dépôt: 14705514.9
(22) Date de dépôt: 19.02.2014
(51) Int. Cl.: F16H 25/20

(54) **VERIN A CABLES TOLERANT AUX DESALIGNEMENTS**
VERSATZTOLERANTES KABELSTELLGLIED
MISALIGNMENT-TOLERANT CABLE ACTUATOR

(30) Priorité: 22.02.2013 FR 1351581
(43) Date de publication de la demande: 30.12.2015
(73) Titulaire: Commissariat à l'Énergie Atomique et aux Énergies Alternatives, 75015 Paris (FR)
(72) Inventeur: GARREC, Philippe, 91190 Gif-sur-Yvette (FR); KFOURY, Fares, 91300 Massy (FR)
(74) Mandataire: Lavialle, Bruno François Stéphane
(86) Numéro de dépôt international: PCT/EP2014/053258
(87) Numéro de publication internationale: WO 2014/128178

(56) Documents cités:
- JP-A- 2007 308 085
- US-A- 5 802 639
- US-A1- 2002 108 816
- US-A1- 2011 056 321

## Description

L'invention concerne un vérin à câble comportant un ensemble vis/écrou dont l'écrou est mobile en translation et attelé à une paire de câbles.

### ARRIERE PLAN DE L'INVENTION

On connaît des vérins à câble, comportant un ensemble vis/écrou dont la vis est entraînée en rotation par un moteur électrique, et dont l'écrou est mobile en translation. L'élément mobile est attelé à un ou des câbles pour exercer une traction sur ceux-ci.

On connaît du document FR2809464 un tel vérin à câble, dans lequel l'élément en translation est la vis, alors que l'écrou est mobile en rotation sous l'action d'un moteur. Le câble passe dans un perçage de la vis et est attelé au moyen d'une attache tolérante aux désalignements du câble.

Dans certaines applications, notamment dans des applications robotiques, l'encombrement du vérin est très critique, et il importe de faire en sorte que cet encombrement soit le plus petit possible.

Il est connu des vérins à câbles comportant une vis montée à rotation et entraînée par un moteur électrique, un écrou coopérant avec la vis et associé à des moyens d'anti-rotation de sorte qu'une rotation de la vis sous l'action du moteur provoque un déplacement axial de l'écrou, et deux câbles parallèles attelés à l'écrou de part de d'autre de celui-ci.

Ce dispositif permet, pour une même course, de diminuer l'encombrement du vérin à câbles. En effet, dans les vérins à câbles connus dont le ou les câbles sont attelés à la vis qui se déplace, il convient de prévoir un dépassement de la vis de part et d'autre du vérin. Ainsi, l'encombrement général serait au moins de 2C+L, où C est la course du vérin, et L l'encombrement de l'écrou. Dans le vérin de l'invention, cet encombrement minimal n'est plus que de C+L.

Il est également connu du document US2002/0108816 un vérin à câbles comprenant un châssis sur lequel est montée à rotation une vis qui est entraînée par un moteur électrique. Un écrou coopérant avec la vis est associé à des moyens d'anti-rotation de sorte qu'une rotation de la vis sous l'action du moteur provoque un déplacement axial de l'écrou. Deux câbles sensiblement parallèles sont attelés à l'écrou de part de d'autre de celui-ci et sont reliés à un organe d'ancrage qui est interposé entre l'écrou et les câbles, l'organe d'ancrage étant solidarisé à l'écrou tout en étant mobile par rapport à celui-ci.

### OBJET DE L'INVENTION

L'invention a pour objet de proposer un vérin à câble du type précité, tolérant aux divers déplacements et déformations susceptibles d'interférer sur son fonctionnement.

### RESUME DE L'INVENTION

En vue de la réalisation de ce but, on propose selon l'invention un vérin à câbles tel que décrit dans la revendication 1.

Ainsi, les éventuels désalignements des câbles sont absorbés par un mouvement de l'organe d'ancrage, sans contraindre l'écrou.

### BREVE DESCRIPTION DES DESSINS

L'invention sera mieux comprise à la lecture de la description qui suit de divers modes de réalisation de l'invention, en référence aux figures des dessins annexés, parmi lesquelles :
- La figure 1 est une vue en perspective partielle d'un vérin à câbles;
- les figures 2A et 2B sont des schémas de fonctionnement du vérin à câbles de la figure 1, l'écrou étant présenté dans les deux positions axiales extrêmes ;
- la figure 3 est une vue partielle en perspective d'un vérin selon un mode particulier de réalisation dont l'écrou est équipé d'un organe d'ancrage pivotant ;
- les figures 4A et 4B sont des vues de côté selon deux orientations perpendiculaires illustrant un vérin à organe d'ancrage selon un autre mode particulier de réalisation, illustrant deux situations de désalignement des câbles ;
- les figures 5A et 5B sont des vues de côté selon deux orientations perpendiculaires illustrant un vérin à organe d'ancrage selon un autre mode particulier de réalisation, illustrant deux situations de désalignement des câbles ;
- la figure 6 est une représentation schématique en perspective d'un autre mode de réalisation particulier d'un vérin à câbles selon l'invention ;
- la figure 7 est une vue de détail en perspective d'un détail du mode de réalisation de la figure 6 ;
- la figure 8 est une représentation schématique en perspective d'un autre mode de réalisation particulier d'un vérin à câbles selon l'invention.

### DESCRIPTION DETAILLEE DE L'INVENTION

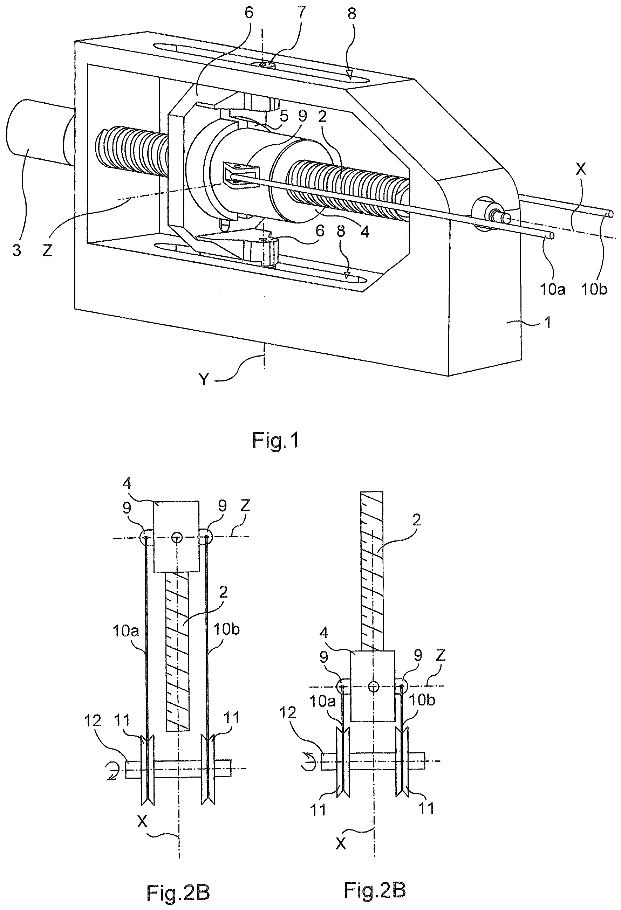

En référence à la figure 1, le vérin à câbles comprend un châssis 1 sur lequel une vis 2 est montée tournante selon un axe X en étant entraînée en rotation, ici par un moteur électrique 3. Un écrou 4 coopère avec la vis 2 et est associé à un dispositif d'anti-rotation 5 comportant deux bras 6 qui s'étendent de part et d'autre de l'écrou 4 pour porter des galets 7 (un seul est ici visible) qui sont montés tournants selon un axe Y normal à l'axe X. Les galets 7 sont engagés dans des lumières longitudinales 8 qui sont ménagées dans le châssis et qui s'étendent parallèlement à l'axe X. L'axe Y passe sensiblement au centre de l'écrou 4. Ainsi, l'écrou se déplace axialement sous l'effet de la rotation de la vis, sans tourner autour de l'axe X. Cependant, des déviations angulaires sont permises autour de l'axe Y, mais également autour d'un axe Z normal aux axes X et Y.

L'écrou 4 comporte des moyens d'attelage 9 de deux câbles 10a, 10b s'étendant de part et d'autre de l'écrou 4 parallèlement à l'axe X. Ici, les moyens d'attelage comportent deux chapes doubles (une seule est visible ici) qui s'étendent de part et d'autre de l'écrou 4.

Comme cela est illustré aux figures 2A et 2B, les câbles 10a et 10b sont chacun enroulés autour d'une poulie 11, les deux poulies 11 étant solidaires d'un même arbre 12 monté tournant en rotation selon un axe parallèle à l'axe Z. L'arbre 12 est ainsi entraîné en rotation dès qu'une traction est exercée sur les câbles par déplacement de l'écrou 4. De façon connue en soi, les câbles 10a et 10b sont maintenus tendus par exemple en disposant les câbles en boucle entre deux poulies (comme dans le document FR2809464), ou, si seule une action unidirectionnelle est requise, au moyen d'un ressort de tension.

Diverses causes peuvent introduire des perturbations provoquant une dissymétrie dans la traction des deux câbles 10. En particulier, l'arbre 12 peut ne pas tourner autour d'un axe parfaitement parallèle à l'axe Z, et peut subir des décalages axiaux ou transversaux. De même, on sait que si l'on utilise une vis à billes ou à rouleaux, l'écrou est susceptible d'osciller autour d'un axe transversal inclus ou non dans le plan défini par la paire de câbles (en particulier, si le vérin est équipé d'un dispositif d'anti-rotation comme celui présenté à la figure 1, l'écrou oscillera autour de l'axe Y), ce qui va naturellement induire des dissymétries dans la traction des câbles 10a, 10b.

Pour absorber ces perturbations, et conformément à l'invention, on équipe l'écrou 4 d'un organe d'ancrage sur lequel les câbles sont directement attelés, l'organe d'ancrage étant solidaire de l'écrou tout en étant mobile par rapport à celui-ci pour absorber ces perturbations et assurer une traction homogène des deux câbles.

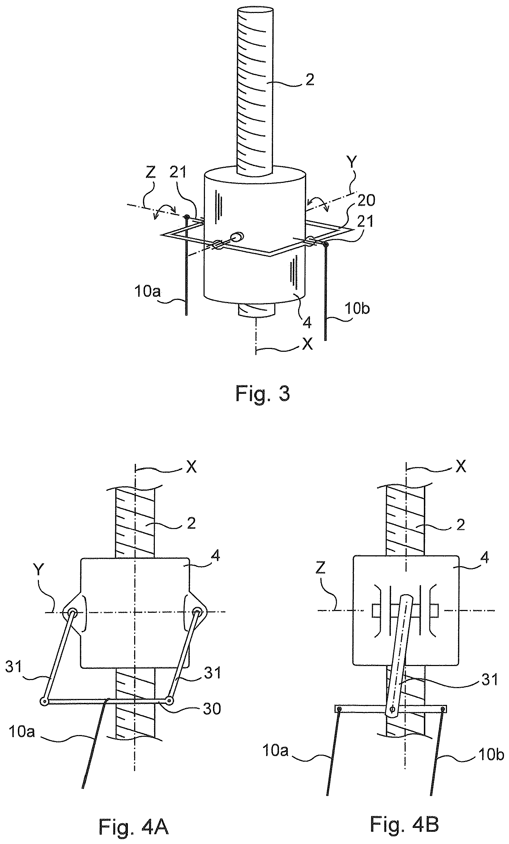

Selon un mode particulier de réalisation illustré à la figure 3, l'organe d'ancrage comporte ici un cadre 20 monté pour pivoter sur l'écrou 4 selon l'axe Y. Le cadre 20 comporte des pivots 21 montés pivotants sur le cadre autour de l'axe Z (quand le cadre est droit comme présenté ici). Les câbles 10a et 10b sont directement attelés aux pivots 21. Ainsi, l'écrou est libre d'osciller autour de l'axe Y sans pour autant provoquer un déséquilibre dans la traction des câbles 10a, 10b.

En variante, on pourra atteler les câbles directement sur le cadre 20, la souplesse naturelle des câbles absorbant toute rotation autour de l'axe Z.

Selon un autre mode particulier de réalisation illustré aux figures 4A et 4B, l'écrou est toujours associé à un cadre 30 auquel les câbles 10a et 10b sont attelés. Cependant, le cadre 30 est non plus monté pivotant sur l'écrou 4, mais suspendu à celui-ci au moyen de deux bielles rigides 31 à extrémités rotulées. Les bielles 31 s'étendent de part et d'autre de l'écrou 4, les bielles étant de préférence attelées à ce dernier en des points d'accrochage symétriques par rapport à l'axe X (qui sont sur l'axe Y sur la figure 4a). Les câbles 10a et 10b sont directement attelés au cadre 30 en deux points symétriques (selon l'axe Z sur la figure 4B). On voit sur les deux figures comment un tel cadre 30 permet d'absorber un décalage selon l'axe Y de l'axe de rotation de l'arbre 12 (Figure 4A), et un décalage de ce même axe de rotation selon l'axe Z (Figure 4B). Un décalage angulaire dudit axe de rotation autour de l'axe X ou autour de l'axe Y serait de la même façon absorbé par la mobilité du cadre 31.

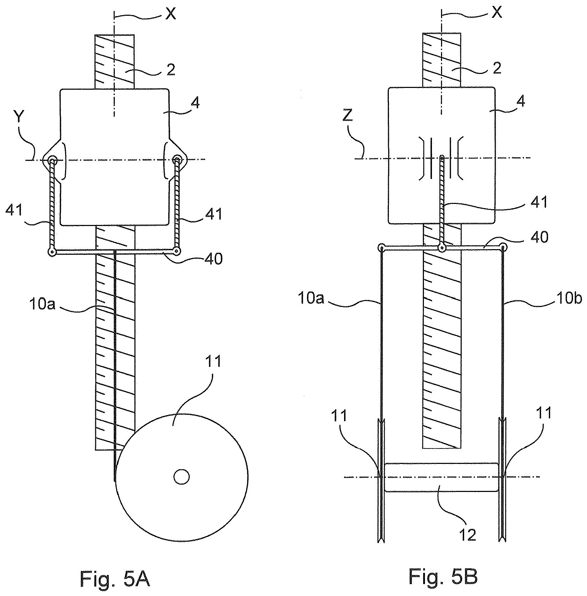

Selon encore un autre mode de réalisation illustré aux figures 5A et 5B, le cadre 40 est maintenant suspendu à l'écrou au moyen de deux portions de câbles 41 naturellement flexibles.

Ces portions de câbles 41 peuvent être reliées simplement à l'écrou et au cadre, sans rotulage. Par exemple, leurs extrémités peuvent être fixées directement à l'écrou et au cadre ou former une boucle autour d'une broche.

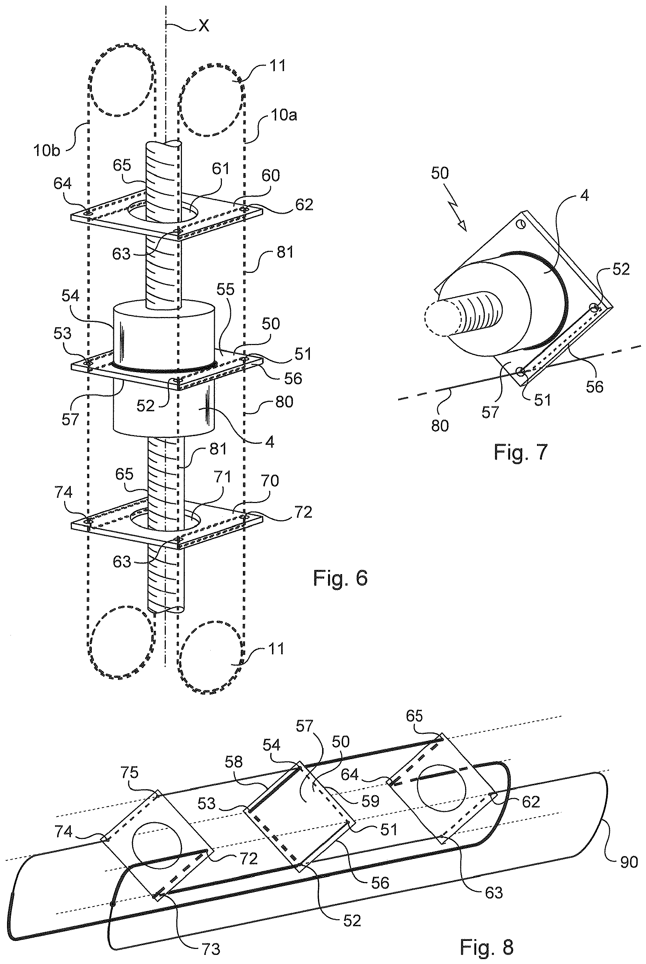

Dans le mode de réalisation représenté en figure 6, l'écrou 4 est rigidement lié (ici par soudage) à un cadre 50 de forme carrée comportant en chacun de ses coins des perçages référencés 51 à 54. Deux cadres carrés 60 et 70 comprenant chacun un orifice central 61, 71 pour le passage de la vis 2 s'étendent de part et d'autre du cadre 50. Les cadres 60 et 70 comprennent en chacun de leurs coins des perçages respectifs référencés 62 à 65 et 72 à 75. Le câble 10a et le câble homologue 10b sont enroulés autour de poulies 11 et s'étendent au travers des perçages des cadres 50, 60 et 70. Comme détaillé à la figure 7, un premier brin 80 du câble 10a passe au travers du perçage 51, s'étend sur la première face 55 du cadre 50 en longeant le bord 56, passe ensuite au travers du perçage 52 et s'étend sur la deuxième face 57 du cadre 50 en longeant le bord 56 puis repasse au travers du perçage 51. Le premier brin 80 du câble 10a réalise alors un tour mort sur le cadre 50 et fixe le câble 10a à l'écrou 104. Le premier brin 80 du câble 10a s'étend jusqu'au cadre 60 et réalise un tour mort sur celui-ci au travers des perçages 62 et 63 pour sortir au travers du perçage 62 et aller s'enrouler sur la poulie 111. Le deuxième brin 81 du câble 10a s'étend parallèlement au premier brin 80 jusqu'au cadre 60 et réalise alors un tour mort sur celui-ci au travers des perçages 63 et 62 pour sortir au travers du perçage 63. Le deuxième brin 81 réalise ensuite un tour mort sur le cadre 50 au travers des perçages 52 et 51 pour sortir au travers du perçage 52. Le deuxième brin 81 s'engage alors dans le perçage 71 du cadre 70 et réalise un tour mort sur le cadre 70 au travers des perçages 73 et 72 pour ressortir au travers du perçage 73 et aller s'enrouler sur la poulie 11. Le deuxième brin 81 se raccorde alors au premier brin 80 et réalise un tour mort sur le cadre 70 au travers des perçages 72 et 73 pour sortir au travers du perçage 73 et rejoindre le premier brin 80 s'engageant au travers du perçage 51 du cadre 50. Le câble homologue 10b suit un cheminement similaire au travers des perçages 53, 54 du cadre 50, 64, 65 du cadre 60, 74 et 75 du cadre 70.

Les câbles 10a et 10b sont ainsi reliés à l'écrou 4 par un organe d'ancrage comprenant les cadres 60 et 70 et les brins de câble 80, 81. Les cadres 60 et 70 sont suspendus à l'écrou 4 par les brins de câble 80 et 81 (qui jouent le même rôle que les bielles 31 et les portions de câbles 41 des modes de réalisation précédents) tout en étant mobiles par rapport à l'écrou.

Le blocage des câbles à l'aide de tours morts est particulièrement utile lors de l'utilisation de câbles en matériau synthétique, notamment des ficelles en polyaramide dont le sertissage sur l'écrou 104 est difficile à réaliser. Bien évidemment, l'utilisation de tours morts pour solidariser les câbles 10a et 10b à l'écrou (via le cadre 50) ainsi qu'aux organes d'ancrages (ici les cadres 60 et 70) ne se limite pas à des tours morts simples, et l'effet de blocage pourra être renforcé en réalisant plusieurs tours morts en passant le câble plusieurs fois au travers de la même paire de perçages.

Selon un autre mode de réalisation particulier représenté en figure 8, la transmission par les câbles 10a et 10b est réalisée à l'aide d'une unique boucle de câble 90 dont les deux brins, qui forment les câbles 10a et 10b, ont été représentés en traits d'épaisseurs différentes pour faciliter la compréhension. Cet effet est obtenu en modifiant le mode de réalisation des tours morts sur le cadre 50. Le premier brin 91 du câble 90 (correspondant au premier brin 80 du mode de réalisation de la figure 6) s'engage au travers du perçage 52 du cadre 50 s'étend sur la première face 55 du cadre 50 en longeant un bord adjacent au bord 56, passe ensuite au travers du perçage 53, et s'étend sur la deuxième face 57 du cadre 50 en longeant un bord 58 du cadre 50 parallèle au bord 56 puis passe au travers du perçage 54 avant de s'engager au travers du perçage 65 du cadre 60. Le brin 91 s'étend alors entre le perçage 65 et le perçage 64, ressort par le perçage 64 et passe au dessus du bord du cadre 60 pour aller s'enrouler sur la poulie 11 et rejoindre la poulie 11 lui faisant face sans s'engager dans aucun des cadres 50, 60, 70. Le brin 91 s'engage alors dans le perçage 74 du cadre 70 pour ressortir par le perçage 75, passer au dessus du bord du cadre 70 et s'étendre jusqu'au perçage 54 du cadre 50. Le brin 91 s'engage alors au travers du perçage 54 du cadre 50 s'étend sur la deuxième face 57 du cadre 50 en longeant un bord adjacent au bord 58, passe ensuite au travers du perçage 51, et s'étend sur la première face 56 du cadre 50 en longeant le bord 56 du cadre 50 puis passe au travers du perçage 52 avant de s'engager au travers du perçage 63 du cadre 60. Le brin 91 s'étend alors entre le perçage 63 et le perçage 62, ressort par le perçage 62 et passe au dessus du bord du cadre 60 pour aller s'enrouler sur la poulie 11 et rejoindre la poulie 11 lui faisant face sans s'engager dans aucun des cadres 50, 60, 70. Le brin 91 s'engage alors dans le perçage 72 du cadre 70 pour ressortir par le perçage 73, passer au dessus du bord du cadre 70 et s'étendre jusqu'au perçage 52 du cadre 50.

Ce mode de réalisation permet d'obtenir un vérin à câble dont les variations de longueur et d'élasticité ont un effet uniforme sur le fonctionnement du vérin.

L'invention n'est pas limitée à ce qui vient d'être décrit, mais englobe toute variante entrant dans le cadre de l'invention défini par les revendications. En particulier, bien que l'organe d'ancrage prenne ici la forme d'un cadre, l'organe d'ancrage pourra prendre toute forme du moment qu'il soit solidarisé à l'écrou tout en étant mobile par rapport à celui-ci. Tout moyen d'attelage de l'organe d'ancrage à l'écrou pourra être envisagé.

En outre, bien que dans les exemples illustrés, l'organe d'ancrage soit attelé à l'écrou par des moyens d'attelage reliés à l'organe d'ancrage en deux points définissant un premier axe transversal à l'axe de rotation de la vis, les câbles étant attelés à l'organe d'ancrage en un deuxième axe transversal perpendiculaire au premier axe transversal, les deux axes transversaux peuvent ne pas être perpendiculaires entre eux, mais simplement obliques.

## Revendications

1. Vérin à câbles comprenant :
- un châssis (1) ;
- une vis (2) montée à rotation sur le châssis et entraînée par un moteur électrique ;
- un écrou (4) coopérant avec la vis et associé à des moyens d'anti-rotation de sorte qu'une rotation de la vis sous l'action du moteur provoque un déplacement axial de l'écrou ;
- deux câbles (10) sensiblement parallèles attelés à l'écrou de part de d'autre de celui-ci et reliés à un organe d'ancrage (20;30;40) qui est interposé entre l'écrou et les câbles, l'organe d'ancrage étant solidarisé à l'écrou tout en étant mobile par rapport à celui-ci;
**caractérisé en ce que**
- les câbles (10) sont chacun enroulés autour d'une poulie (11), les deux poulies (11) étant solidaires d'un même arbre (12).

2. Vérin à câbles selon la revendication 1, dans lequel l'organe d'ancrage (20) est monté pivotant sur l'écrou (4) autour d'un axe transversal (Y) perpendiculaire à un axe de rotation de la vis (X).

3. Vérin à câbles selon la revendication 2, dans lequel les câbles sont attelés à l'organe d'ancrage en étant attachés à des pivots montés tournants sur l'organe d'ancrage selon un axe (Z) perpendiculaire à l'axe transversal (Y) et à l'axe de rotation de la vis (X).

4. Vérin à câbles selon la revendication 2, dans lequel les câbles (10) sont directement attelés à l'organe d'ancrage.

5. Vérin à câbles selon la revendication 1, dans lequel l'organe d'ancrage (30) est suspendu à l'écrou au moyen de deux bielles (31) rigides parallèles attelés d'une part à l'écrou de part et d'autre de celui-ci, et d'autre part à l'organe d'ancrage.

6. Vérin à câbles selon la revendication 1, dans lequel l'organe d'ancrage (40) est suspendu à l'écrou au moyen de deux portions de câbles (41) parallèles attelés d'une part à l'écrou de part et d'autre de celui-ci, et d'autre part à l'organe d'ancrage.

7. Vérin à câbles selon la revendication 1, dans lequel l'organe d'ancrage est attelé à l'écrou par des moyens d'attelage qui sont reliés à l'organe d'ancrage en deux points d'attelage définissant un premier axe transversal (Y) perpendiculaire à un axe de rotation de la vis, tandis que les câbles sont attelés sur l'organe d'ancrage en deux points qui définissent un deuxième axe transversal (Z) perpendiculaire à un axe de rotation de la vis qui est perpendiculaire au premier axe transversal.

8. Vérin à câbles selon la revendication 1, dans lequel les moyens d'anti-rotation comprennent deux galets (7) s'étendant de part et d'autre de l'écrou qui se déplacent dans des lumières longitudinales (8) du châssis.

9. Vérin à câbles selon la revendication 1, dans lequel l'écrou comprend un cadre (50) qui est solidaire de l'écrou et qui est pourvu de perçages, les câbles étant attelés à l'écrou par l'intermédiaire de tours morts au travers des perçages du cadre.

10. Vérin à câbles selon la revendication 9, dans lequel l'organe d'ancrage comporte deux cadres (60, 70) s'étendant de part et d'autre du cadre solidaire de l'écrou et dans lesquels les câbles sont engagés, des brins des câbles s'étendant entre le cadre (50) solidaire de l'écrou et les deux cadres de l'organe d'ancrage formant une suspension de l'organe d'ancrage à l'écrou.

## Patentansprüche

1. Kabelwinde, umfassend:
- einen Rahmen (1);
- eine Schraube (2), die drehbar an dem Rahmen angebracht und von einem Elektromotor angetrieben ist;
- eine Mutter (4), die mit der Schraube zusammenwirkt und derart mit Verdrehschutzmitteln verbunden ist, dass eine Drehung der Schraube unter der Wirkung des Motors eine axiale Verschiebung der Mutter bewirkt;
- zwei im Wesentlichen parallele Kabel (10), die an jeder Seite mit der Mutter gekoppelt und mit einem Verankerungselement (20; 30; 40) verbunden sind, das zwischen der Mutter und dem Kabel angeordnet ist, wobei das Verankerungselement an der Mutter befestigt ist, während es relativ zu dieser beweglich ist;
**dadurch gekennzeichnet, dass**
- die Kabel (10) jeweils um eine Riemenscheibe (11) gewickelt sind, wobei die beiden Riemenscheiben (11) an derselben Welle (12) befestigt sind.

2. Kabelwinde nach Anspruch 1, bei der das Verankerungselement (20) an der Mutter (4) schwenkbar um eine Querachse (Y) senkrecht zu einer Drehachse (X) der Schraube gelagert ist.

3. Kabelwinde nach Anspruch 2, bei der die Kabel mit dem Verankerungselement gekoppelt sind, indem sie an Drehpunkten angebracht sind, die drehbar an dem Verankerungselement längs einer Achse (Z) senkrecht zur Querachse (Y) und zur Drehachse (X) der Schraube angebracht sind.

4. Kabelwinde nach Anspruch 2, bei der die Kabel (10) direkt mit dem Verankerungselement gekoppelt sind.

5. Kabelwinde nach Anspruch 1, bei der das Verankerungselement (30) an der Mutter mittels zweier paralleler, starrer Stangen (31) aufgehängt ist, die einerseits auf beiden Seiten mit der Mutter und andererseits mit dem Verankerungselement gekoppelt sind.

6. Kabelwinde nach Anspruch 1, bei der das Verankerungselement (40) an der Mutter mittels zweier paralleler Kabelabschnitte (41) aufgehängt ist, die einerseits auf beiden Seiten mit der Mutter und andererseits mit dem Verankerungselement gekoppelt sind.

7. Kabelwinde nach Anspruch 1, bei der das Verankerungselement mit der Mutter durch Kopplungsmittel gekoppelt ist, die mit dem Verankerungselement in zwei Kopplungspunkten verbunden sind, die eine erste Querachse (Y) senkrecht zu einer Drehachse der Schraube definieren, während die Kabel mit dem Verankerungselement in zwei Punkten gekoppelt sind, die eine zweite Querachse (Z) senkrecht zu einer Drehachse der Schraube definieren, die senkrecht zu der ersten Querachse ist.

8. Kabelwinde nach Anspruch 1, bei der die Verdrehschutzmittel zwei Rollen (7) umfassen, die sich auf beiden Seiten der Mutter erstrecken und sich in Längsschlitzen (8) des Rahmens bewegen.

9. Kabelwinde nach Anspruch 1, bei der die Mutter einen Rahmen (50) aufweist, der mit der Mutter einstückig und mit Löchern versehen ist, wobei die Kabel mit der Mutter über Totgänge durch die Löcher in dem Rahmen verbunden sind.

10. Kabelwinde nach Anspruch 9, bei der das Verankerungselement zwei Rahmen (60, 70) aufweist, die sich auf beiden Seiten des Rahmens erstrecken, der einstückig mit der Mutter ist, und in die die Kabel greifen, wobei sich Kabelstränge zwischen dem mit der Mutter einstückigen Rahmen (50) und den beiden Rahmen des Verankerungselementes erstrecken und eine Aufhängung des Verankerungselements an der Mutter bilden.

## Claims

1. A cable actuator comprising:
- a chassis (1);
- a screw (2) which is fitted so as to rotate on the chassis and is driven by an electric motor;
- a nut (4) which cooperates with the screw and is associated with anti-rotation means, such that rotation of the screw under the action of the motor gives rise to an axial displacement of the nut;
- two substantially parallel cables (10) which are coupled to the nut on both sides of it;
**characterized in that**
- the cables (10) are each wound around a pulley (11), the two pulleys (11) being integral with a same shaft (12).

2. The cable actuator as claimed in claim 1, wherein the anchorage unit (20) is fitted so as to pivot on the nut (4) around a transverse axis (Y) perpendicular to an axis of rotation of the screw (X).

3. The cable actuator as claimed in claim 2, wherein the cables are coupled to the anchorage unit whilst being attached to pivots fitted so as to turn on the anchorage unit according to an axis (Z) which is perpendicular to the transverse axis (Y) and to the axis of rotation of the screw (X).

4. The cable actuator as claimed in claim 2, wherein the cables (10) are coupled directly to the anchorage unit.

5. The cable actuator as claimed in claim 1, wherein the anchorage unit (30) is suspended on the nut by means of two parallel rigid connecting rods (31) which are coupled firstly to the nut on both sides of the latter, and secondly to the anchorage unit.

6. The cable actuator as claimed in claim 1, wherein the anchorage unit (40) is suspended on the nut by means of two parallel portions of cable (41) which are coupled firstly to the nut on both sides of the latter, and secondly to the anchorage unit.

7. The cable actuator as claimed in claim 1, wherein the anchorage unit is coupled to the nut by coupling means which are connected to the anchorage unit at two coupling points which define a first transverse axis (Y) perpendicular to an axis of rotation of the screw, whereas the cables are coupled on the anchorage unit at two points which define a second transverse axis (Z) perpendicular to an axis of rotation of the screw which is perpendicular to the first transverse axis.

8. The cable actuator as claimed in claim 1, wherein the anti-rotation means comprise two rollers (7) which extend on both sides of the nut, and are displaced in longitudinal slots (8) in the chassis.

9. The cable actuator as claimed in claim 1, wherein the nut comprises a frame (50) which is integral with the nut and is provided with bores, the cables being coupled to the nut by means of dead turns through bores in the frame.

10. The cable actuator as claimed in claim 9, wherein the anchorage unit comprises two frames (60, 70) which extend on both sides of the frame which is integral with the nut, and in which the cables are engaged, with strands of the cables extending between the frame (50) which is integral with the nut and the two frames of the anchorage unit forming a suspension for the anchorage unit on the nut.
